# FASCICULE DE BREVET EUROPEEN

(11) **EP 4 098 559 B1**
(45) Date de publication et mention de la délivrance du brevet: **26.04.2023**
(21) Numéro de dépôt: 22163710.1
(22) Date de dépôt: 23.03.2022
(51) Int. Cl.: B64C 1/32, A62B 35/00, B64D 25/08

(54) **ARRANGEMENT MUNI D'UN SYSTÈME D'ÉVACUATION D'URGENCE**
ANORDNUNG MIT EINEM NOTFALL-ENTLEERUNGSSYSTEM
ARRANGEMENT PROVIDED WITH AN EMERGENCY EVACUATION SYSTEM

(30) Priorité: 03.06.2021 FR 2105837
(43) Date de publication de la demande: 07.12.2022
(73) Titulaire: Airbus Helicopters, 13725 Marignane Cedex (FR)
(72) Inventeur: MORELLON, Emeric, 13127 VITROLLES (FR)
(74) Mandataire: GPI Brevets

(56) Documents cités:
- EP-A1- 3 473 546
- JP-A- H10 127 798
- JP-U- S5 961 042
- KR-A- 20050 000 045
- Bright: "Boeing 737 300/500 aircraft Flight Deck Sliding Window", YouTube, 15 avril 2015 (2015-04-15), page 1, XP054978282, Extrait de l'Internet: URL:https://www.youtube.com/watch?v=TrL-9_ Vngck [extrait le 2018-04-20]

## Description

La présente invention concerne un arrangement muni d'un système d'évacuation d'urgence.

Un tel arrangement peut être agencé dans de multiples systèmes, éventuellement dans un bâtiment voire un véhicule.

Par exemple, un véhicule, et notamment un aéronef, peut comprendre un ou plusieurs systèmes d'évacuation d'urgence pour évacuer, si nécessaire, les individus présents dans ce véhicule. Ces individus peuvent être des passagers ou des personnels de bord. De tels systèmes d'évacuation d'urgence peuvent comprendre des issues de secours.

Cependant, un aéronef peut avoir des dimensions relativement importantes. Lorsque cet aéronef repose sur le sol, une issue de secours peut se trouver à une hauteur non négligeable. Dès lors, l'aéronef peut comprendre une ligne de vie pour faciliter l'évacuation des individus vers le sol. L'expression « ligne de vie » désigne un organe allongé pouvant être saisi par un individu, tel que par exemple une corde ou une bande. Certains règlements de certification peuvent notamment imposer un tel système. Le règlement connu sous la dénomination « CS 29 » présente un paragraphe imposant une ligne de vie pour les giravions ayant 30 passagers ou moins de 30 passagers dont les issues de secours sont situées à une hauteur non négligeable.

Typiquement, une ligne de vie peut être rangée dans un logement de l'aéronef. Pour sortir de l'aéronef, un individu peut saisir la ligne de vie et peut la déployer en l'attachant à l'aéronef. Bien qu'efficace, ce système nécessite de saisir la ligne de vie et de l'attacher correctement dans une période de fait anxiogène.

De plus, la localisation de la ligne de vie peut éventuellement poser problème. En présence d'une ligne de vie agencée dans une cabine, si un individu se dirige vers l'issue de secours en oubliant la ligne de vie, il devra de fait retourner dans la cabine pour prendre cette ligne de vie s'il souhaite s'en servir.

Une vidéo présente à l'URL « https://www.youtube.com/watch?v=TrL-9_Vngck » montre ainsi un compartiment fermé par un volet et logeant une ligne de vie.

De même, le document EP 3 473 546 A1 présente un compartiment fermé par un volet dans un habitacle.

Le document JP S59 61042 U montre une corde attachée à une porte.

Le document KR 2005 0000045 A décrit un système muni d'un support, d'un bras et d'une corde.

Le document JP H10 127798 A décrit un système pour ralentir une chute.

Le document US 2019/0118006 décrit un véhicule muni d'un boîtier pouvant être fixé dans une cabine, à proximité d'un siège. Le boîtier contient un câble fluorescent qui est solidement fixé au véhicule de façon permanente ou semi-permanente. De plus, le boîtier contient une source de lumière illuminant le câble.

La présente invention a alors pour objet de proposer un arrangement ayant un système d'évacuation innovant visant à faciliter la descente d'une structure lors de l'évacuation, voire visant à éviter une sollicitation abusive de la ligne de vie en dehors d'une phase d'évacuation. Un tel système est utilisable dans un véhicule mais aussi dans d'autres circonstances, par exemple au sein d'un immeuble.

Un tel arrangement est muni d'une cloison délimitant au moins partiellement une issue de secours, ledit arrangement ayant un panneau mobile obturant ladite issue de secours dans un mode de fonctionnement inactif, ledit arrangement comportant un système d'évacuation muni d'une ligne de vie.

De plus, la ligne de vie comprend un tronçon de déploiement traversant un passage de la cloison et solidaire d'une poignée, ledit panneau délimitant avec la cloison un logement dans lequel est agencée ladite poignée dans le mode de fonctionnement inactif.

Par exemple, la cloison est située au-dessus de l'issue de secours lorsque l'arrangement est au sol et dans le mode de fonctionnement inactif.

L'expression « issue de secours » désigne une ouverture par laquelle un individu peut s'extraire.

Par suite, durant le mode de fonctionnement inactif, la poignée est disposée dans le logement. La poignée est au moins partiellement masquée aux yeux d'un individu. Par exemple, la poignée est totalement invisible de l'extérieur du logement. Il n'y a donc pas de risque que la poignée soit sollicitée par inadvertance. Le tronçon de déploiement est ainsi uniquement accessible dans un mode de fonctionnement d'urgence.

Durant ce mode de fonctionnement d'urgence, le panneau peut être déplacé de manière usuelle pour libérer l'issue de secours. La poignée devient accessible. La ligne de vie est alors située exactement au niveau de l'issue de secours. Un individu peut tirer manuellement sur la poignée du tronçon de déploiement pour tirer la ligne de vie et la déployer. Cet individu peut alors sortir par l'issue de secours en s'aidant de la ligne de vie.

Cet arrangement peut donc permettre d'agencer une ligne de vie de manière sécurisée à proximité immédiate d'une issue de secours. Cet agencement permet de garantir qu'un individu se présentant devant l'issue de secours peut utiliser facilement la ligne de vie une fois l'issue de secours déployée. En outre, l'individu peut déployer manuellement la ligne de vie ce qui permet d'obtenir un système robuste.

Par ailleurs, le déploiement de la ligne de vie est de fait dissocié de l'ouverture de l'issue de secours. La ligne de vie n'est donc pas automatiquement déployée lorsque l'issue de secours est ouverte. Dès lors, si la ligne de vie n'est pas nécessaire, l'invention permet d'éviter d'avoir une ligne de vie entravant inutilement le passage.

Cet arrangement peut par ailleurs comprendre une ou plusieurs des caractéristiques qui suivent, prises seules ou en combinaison.

Selon une possibilité, au moins un espace peut séparer ledit tronçon de déploiement et la poignée dudit panneau, ledit espace empêchant ledit tronçon de déploiement et la poignée de toucher ledit panneau.

Un tel espace peut permettre d'éviter une interférence entre le panneau et le tronçon de déploiement et la poignée. Cet espace peut être dimensionné pour que le tronçon de déploiement et la poignée n'entrent pas en contact avec le panneau lors du déplacement du panneau. Le système d'évacuation ne risque alors pas d'être endommagé lorsque le panneau est déplacé.

Selon une possibilité compatible avec les précédentes, le système d'évacuation peut comporter un boîtier, ladite ligne de vie comportant un tronçon à déployer prolongé par le tronçon de déploiement, ledit tronçon à déployer étant agencé dans le boîtier dans le mode de fonctionnement inactif, ladite cloison étant interposée entre ledit boîtier et ladite issue de secours.

Le boîtier peut être fixé de manière usuelle à une structure de l'arrangement pour être immobilisé. Par exemple, le boîtier est vissé ou riveté à un cadre structural.

Le tronçon à déployer est alors disposé dans le boîtier, une zone d'extrémité proximale de ce tronçon à déployer pouvant être fixée au boîtier de manière usuelle. En outre, le tronçon de déploiement s'étend en dehors du boîtier et traverse la cloison par le passage pour rejoindre le logement.

Eventuellement, le tronçon à déployer peut être plié.

Le tronçon à déployer peut être enroulé sur lui-même dans ledit boîtier, ledit assemblage pouvant comprendre un système anti-déroulement réversible maintenant ledit tronçon à déployer enroulé sur lui-même dans le mode de fonctionnement inactif.

Le terme « réversible » signifie que le système anti-déroulement n'entrave pas la ligne de vie lors de son extraction du boîtier dans le mode de fonctionnement d'urgence.

Cet enroulement et le système anti-déroulement permettent à la ligne de vie d'être déployée uniquement durant le mode de fonctionnement d'urgence sur sollicitation d'un individu.

En outre, un boîtier de petites dimensions et de faible masse peut contenir une ligne de vie de grande longueur. A titre illustratif, un ensemble d'environ 500 grammes peut comprendre une ligne de vie d'environ 3 mètres de longueur dans un boîtier.

Selon une possibilité compatible avec les précédentes, la ligne de vie peut être retenue par une structure de l'arrangement directement ou indirectement par le boîtier. Par exemple, le tronçon à déployer comprend une boucle traversée par une tige solidaire du boîtier voire d'un autre organe de l'assemblage.

Selon un exemple, le système anti-déroulement est muni de deux attaches d'immobilisation auto-agrippantes solidaires du tronçon à déployer et agrippées l'une à l'autre dans le mode de fonctionnement inactif.

Le terme « auto-agrippante » fait référence, ici et par la suite, à un système de fixation ayant deux organes pouvant être fixés l'un à l'autre sans organe tiers, en étant en prises l'un avec l'autre.

Selon un exemple un système auto agrippant peut comprendre un organe à boucles coopérant avec un organe à crochets. Ainsi, une attache peut comprendre des boucles et l'autre attache peut comprendre des crochets, ou inversement.

Selon un autre exemple, un système auto-agrippant peut comprendre deux organes munis de picots en forme de champignon et connu sous la marque dual lock^{®} par exemple. Les picots en forme de champignon s'imbriquent entre eux en pressant les deux organes l'un contre l'autre.

Dès lors, le tronçon à déployer est attaché sur lui-même par le bais des deux attaches d'immobilisation. Le système anti-déroulement permet ainsi de maintenir la ligne de vie dans le boîtier au repos. Lorsqu'un individu tire la poignée, les deux attaches se désolidarisent ce qui permet à la ligne de vie d'être déployée.

Selon un autre aspect, le tronçon de déploiement peut comporter un tronçon initial solidaire du tronçon à déployer, le tronçon initial étant muni d'une attache de retenue auto-agrippante configurée pour être agrippée à une attache de soutien auto-agrippante complémentaire solidaire dudit boîtier. Le tronçon de déploiement peut être maintenu au boîtier à l'aide de plusieurs attaches auto-agrippantes pour éviter que la ligne de vie ne vienne frotter sur l'environnement extérieur à sa sortie du boitier. L'attache de retenue auto-agrippante peut alors permettre d'attacher temporairement le tronçon de déploiement au boîtier. En tirant sur le tronçon de déploiement, un individu peut alors désolidariser l'attache de retenue auto-agrippante de l'attache de soutien auto-agrippante pour déployer la ligne de vie.

Selon une possibilité compatible avec les précédentes, le tronçon à déployer peut être solidaire d'une pluralité de prises.

Au moins localement, la ligne de vie peut comprendre des prises pour aider un individu.

Afin de réduire l'encombrement de la ligne de vie, il est possible de seulement mettre des prises dans les zones jugées les plus utiles. Par exemple au sein d'un aéronef, le tronçon à déployer peut comprendre des prises au niveau d'une zone susceptible de se trouver durant le mode de fonctionnement d'urgence entre un flanc de l'aéronef et une barque de l'aéronef.

Par exemple, une prise peut prendre la forme d'un morceau en cuir ou en caoutchouc ou encore d'une boucle.

Eventuellement, lesdites prises sont agencées en alternance de part et d'autre d'une bande de ladite ligne de vie.

Les prises sont alors réparties selon deux cotés du tronçon à déployer, et donc de la ligne de vie.

Selon une possibilité compatible avec les précédentes, la ligne de vie peut être réalisée avec un matériau durable possédant de bonnes propriétés mécaniques, ainsi qu'une bonne résistance au vieillissement et aux variations de température et d'humidité, par exemple du polyester. Une telle ligne de vie présente des risques minimisés de déchirure et une bonne résistance à l'humidité, à la chaleur et dans le temps. Le matériau constituant la ligne de vie peut ainsi être différent du matériau des prises éventuelles.

Selon une possibilité compatible avec les précédentes, la poignée peut être réalisée à l'aide d'un organe de préhension, par exemple un anneau, fixé de manière usuelle au tronçon de déploiement.

Alternativement, ledit tronçon de déploiement peut être prolongé par un tronçon final de la ligne de vie replié sur lui-même pour former ladite poignée, ledit tronçon final comprenant au niveau de la poignée successivement un tronçon de départ puis un tronçon intermédiaire suivi d'un tronçon d'extrémité, le tronçon d'extrémité étant fixé au tronçon de départ.

La ligne de vie en tant que telle peut alors aisément former une poignée pouvant être saisie par un individu pour être déployée.

Selon une possibilité compatible avec les précédentes, ledit arrangement peut comporter une gaine entourant ledit tronçon intermédiaire.

Cette gaine peut faciliter la saisie de la ligne de vie.

Selon une possibilité compatible avec les précédentes, ledit arrangement peut comporter un lest, éventuellement solidaire dudit tronçon de déploiement ou du tronçon final.

Le lest peut faciliter le déploiement de la ligne de vie.

Eventuellement, le lest est attaché au tronçon intermédiaire.

Selon une possibilité compatible avec les précédentes, ledit tronçon de déploiement ou la poignée peut comporter une fixation auto-agrippante configurée pour être agrippée à une attache de repos auto-agrippante complémentaire solidaire de ladite cloison, ladite attache de repos étant agencée en regard de ladite issue de secours.

La fixation auto-agrippante peut comprendre des boucles et l'attache de repos peut comprendre des crochets, ou inversement, ou encore des picots en forme de champignon ou autres.

La fixation auto-agrippante peut alors permettre d'attacher temporairement le tronçon de déploiement ou la poignée à la cloison et de le ou la maintenir dans le logement. En tirant sur le tronçon de déploiement, un individu peut alors désolidariser la fixation auto-agrippante de l'attache de repos auto-agrippante pour déployer la ligne de vie.

En présence du système anti-déroulement précité, l'assemblage s'avère robuste en comportant deux dispositifs de fixation distincts. Les deux dispositifs de fixation peuvent être de deux technologies différentes, par exemple une technologie à boucles et crochets pour l'un et à picots en forme de champignon pour l'autre.

Eventuellement, la fixation auto-agrippante peut être le cas échéant agencée sur ledit tronçon de départ.

Un tel arrangement peut être agencé sur de multiples supports, par exemple pour former une fenêtre d'un bâtiment muni d'un système d'évacuation.

Selon une possibilité, un véhicule peut comporter au moins un arrangement.

Un tel véhicule peut être un véhicule terrestre, tel que par exemple un train, un véhicule maritime ou un aéronef.

Selon une possibilité, le véhicule peut comporter deux arrangements disposés de part et d'autre d'une cabine, par exemple agencés sur deux flancs distincts du véhicule.

Si le véhicule se couche sur un flanc suite à un crash, au moins un arrangement est toujours accessible.

L'invention et ses avantages apparaîtront avec plus de détails dans le cadre de la description qui suit avec des exemples donnés à titre illustratif en référence aux figures annexées qui représentent :
la figure 1, un schéma présentant un arrangement selon l'invention,
la figure 2, une vue éclatée d'un système d'évacuation,
la figure 3, une vue en trois dimensions du système d'évacuation de la figure 2,
la figure 4, un schéma présentant un système d'évacuation dans le mode de fonctionnement inactif,
la figure 5, un schéma illustrant une ligne de vie munie de prises,
la figure 6, une vue en coupe locale d'un arrangement dans le mode de fonctionnement inactif,
la figure 7, une vue en coupe locale d'un arrangement dans le mode de fonctionnement d'urgence, et
la figure 8, un schéma présentant une ligne de vie déployée dans un mode de fonctionnement d'urgence.

Les éléments présents dans plusieurs figures distinctes sont affectés d'une seule et même référence.

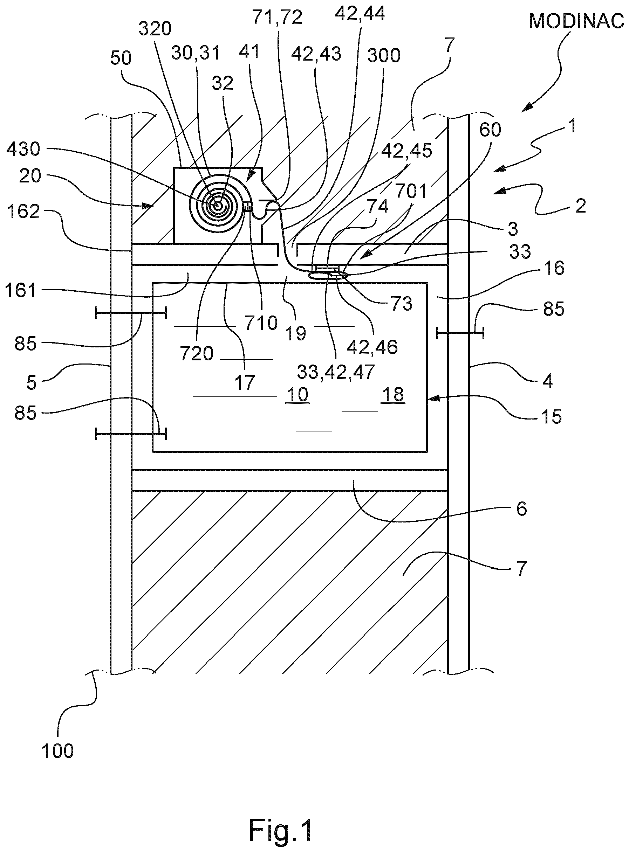

La figure 1 présente un arrangement 1 selon l'invention. Cet arrangement 1 peut être installé au sein de divers systèmes, et par exemple au sein d'un bâtiment ou d'un véhicule.

L'arrangement 1 comporte une structure 2 délimitant une issue de secours 10. Cette structure 2 comporte notamment une cloison 3 délimitant au moins partiellement l'issue de secours 10. La cloison 3 peut être située au dessus de l'issue de secours 10 lorsque l'arrangement 1, et le cas échéant le véhicule, repose sur le sol 100.

A titre illustratif, l'issue de secours 10 peut être disposée latéralement entre deux cadres 4, 5 selon une première direction, et selon une deuxième direction entre la cloison 3 et une séparation 6. Eventuellement, l'arrangement 1 peut comprendre des revêtements 7 autour de l'issue de secours 10. Eventuellement, la structure 2 peut comprendre un support, tel qu'une plaque solidaire de la cloison 3.

Par ailleurs, l'arrangement 1 comprend un panneau 15 mobile. Ce panneau 15 comporte une bordure 16 attachée à la structure 2 par des dispositifs 85 de fixation réversibles usuels. De tels dispositifs 85 comportent à titre d'exemple des goupilles pénétrant chacune dans un orifice de la bordure 16 du panneau 15 et dans un orifice de la structure 2, chaque goupille étant solidaire d'un câble apte à tirer sur la goupille respective pour la faire sortir d'au moins un desdits orifices.

Dans le mode fonctionnement inactif MODINAC visible sur la figure 1, le panneau 15 obture l'issue de secours 10. Le panneau 15 empêche alors un individu de traverser l'issue de secours 10. Dans un mode de fonctionnement d'urgence, le panneau 15 est déplacé, voire complétement enlevé de la structure 2. L'issue de secours 10 n'est plus obturée et un individu peut traverser cette issue de secours 10.

La bordure 16 peut être une partie d'une paroi 18 ou peut être solidaire d'une paroi 18. Eventuellement, la paroi 18 est au moins partiellement transparente ou translucide dans le cadre d'un hublot ou d'une fenêtre.

Par ailleurs, la bordure 16 et la cloison 3 délimitent conjointement un logement 19.

Par exemple, la bordure 16 comporte deux flancs 161, 162 reliés par un fond 17. Les flancs 161, 162 peuvent être sensiblement parallèles entre eux et sensiblement orthogonaux au fond 17. La bordure 16 a alors une forme en U au regard de la cloison 3. Le fond 17 peut être sensiblement parallèle à la cloison 3. Le logement 19 peut avoir une forme externe sensiblement parallélépipédique. L'inverse est aussi possible, la cloison ayant un profil en U au regard d'une face du panneau. Selon un autre exemple, la cloison et la bordure peuvent chacun avoir des profils en L complémentaires.

Indépendamment de ces aspects, l'arrangement 1 comporte un système d'évacuation 20 muni d'une ligne de vie 30. La ligne de vie 30 comporte un élément allongé 31 qui s'étend d'une zone d'extrémité proximale 32 jusqu'à une extrémité distale 33. Par exemple, cet élément allongé 31 comporte une bande, une sangle ou une corde et/ou est en polyester.

Par exemple, la ligne de vie 30 comporte un tronçon à déployer 41 muni de la zone d'extrémité proximale 32. Le tronçon à déployer 41 est logé dans un boîtier 50 solidaire de la structure 2, par exemple solidaire de la cloison 3 ou d'un support proche de la cloison 3.

De plus, la ligne de vie 30 comprend un tronçon de déploiement 42, muni éventuellement de l'extrémité distale 33, qui prolonge le cas échéant le tronçon à déployer 41. La ligne de vie 30 traverse alors le cas échéant une ouverture du boîtier 50, le tronçon à déployer 41 étant dans le boîtier 50 alors que le tronçon de déploiement 42 est en dehors du boîtier 50 dans le mode de fonctionnement inactif MODINAC.

Eventuellement, le tronçon à déployer 41 peut être retenu par un organe pour être tout le temps attaché à la structure 2. Par exemple, le tronçon à déployer 41 est retenu directement par la structure 2 ou indirectement via le boîtier 50. Selon une possibilité, la zone d'extrémité proximale 32 peut former, par exemple par couture, collage ou autres, une boucle 320 traversée par une tige 430 du boîtier. Le tronçon à déployer 41 est alors mobile en rotation autour de cette tige 430 afin d'être déroulé.

Par ailleurs, le tronçon de déploiement 42 traverse un passage 300 de la cloison 3 pour rejoindre le logement 19 dans le mode de fonctionnement inactif MODINAC. Dans le logement 19, le tronçon de déploiement 42 est solidaire d'une poignée 60 qui est de fait inaccessible dans le mode de fonctionnement inactif MODINAC. La cloison 3 est alors positionnée entre le boîtier 50 et l'issue de secours 10.

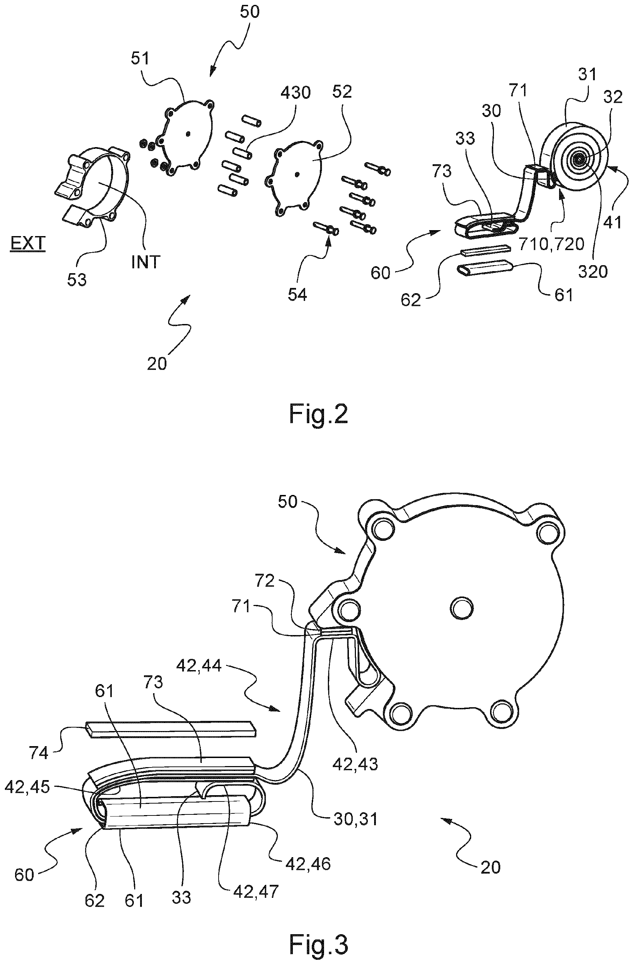

Les figures 2 et 3 illustrent un système d'évacuation 20 respectivement dans une vue éclatée et en trois dimensions.

En référence à la figure 2, le boîtier 50 peut, par exemple, comprendre deux plaques 51, 52 disposées de part et d'autre d'une paroi discontinue 53. Les plaques 51, 52 et la paroi discontinue 53 peuvent être traversées par des moyens de fixation 54 usuels, tels que des vis, des rivets ou autres. La paroi 53 est discontinue puisqu'elle présente une ouverture mettant en communication un espace interne INT du boîtier 50 et un milieu extérieur EXT.

Eventuellement, le tronçon à déployer 41 est enroulé sur lui-même dans le boîtier 50 dans le mode de fonctionnement inactif MODINAC. Eventuellement, la zone d'extrémité proximale 32 est fixée au boîtier 50 par des moyens usuels. Comme indiqué précédemment, la zone d'extrémité proximale 32 peut former une boucle 320 autour d'un moyen de fixation 54, et par exemple autour d'une tige 430 creuse traversée par une vis ou un rivet.

Indépendamment de ces caractéristiques, le tronçon de déploiement 42 comporte successivement un tronçon initial 43 qui est solidaire du tronçon à déployer 41 et un tronçon de liaison 44 solidaire d'une poignée 60.

Une poignée usuelle peut ainsi être fixée au tronçon de déploiement 42.

Alternativement et selon les figures et notamment la figure 3, un tronçon final de la ligne de vie prolonge le tronçon de déploiement 42 et forme la poignée 60. Ce tronçon final comporte alors successivement, un tronçon de départ 45 solidaire du tronçon de liaison 44, un tronçon intermédiaire 46 et un tronçon d'extrémité 47 comprenant l'extrémité distale 33. Pour former la poignée 60, le tronçon final peut être partiellement replié sur lui-même. Par exemple, le tronçon final est plié sensiblement à 180 degrés après le tronçon de départ 45 puis sensiblement à 180 degrés après le tronçon intermédiaire 46 afin que le tronçon d'extrémité 47 soit attaché au tronçon de départ 45, par exemple par couture, soudure et/ou collage.

Selon une autre caractéristique, l'arrangement 1 peut comporter une gaine 61 entourant ledit tronçon intermédiaire 46.

Selon une autre caractéristique, l'arrangement 1 peut comporter un lest 62 solidaire du tronçon de déploiement 42, voire de la poignée 60. Par exemple, le lest 62 est attaché au tronçon intermédiaire 46 ou à la gaine, de manière usuelle, par exemple par collage, couture ou autres. Le cas échéant, le lest 62 peut être disposé dans la gaine 61.

Selon une autre caractéristique optionnelle illustrée sur les figures 1,2 et 3, le tronçon de déploiement 42 peut être muni d'un système de maintien pour éviter de frotter contre des éléments extérieurs durant le mode de fonctionnement inactif MODINAC.

Par exemple, le tronçon initial 43 peut être solidaire d'une attache de retenue 71 auto-agrippante. Par exemple, l'attache de retenue 71 est fixée au tronçon initial 43 par couture, collage ou autres. Cette attache de retenue 71 peut coopérer avec une attache de soutien 72 du boîtier. Dans le mode de fonctionnement inactif MODINAC, l'attache de retenue 71 est agrippée à l'attache de soutien 72.

Selon l'exemple de la figure 3, une attache de soutien 72 auto-agrippante, complémentaire de l'attache de retenue 71, est solidaire dudit boîtier 50. Dans le mode de fonctionnement inactif MODINAC, l'attache de retenue 71 est agrippée à l'attache de soutien 72. Eventuellement, le tronçon initial 43 est détendu entre le boîtier 50 et l'attache de retenue 71.

Selon un autre aspect, l'assemblage peut comprendre un système pour éviter un déroulement non désiré de la ligne de vie.

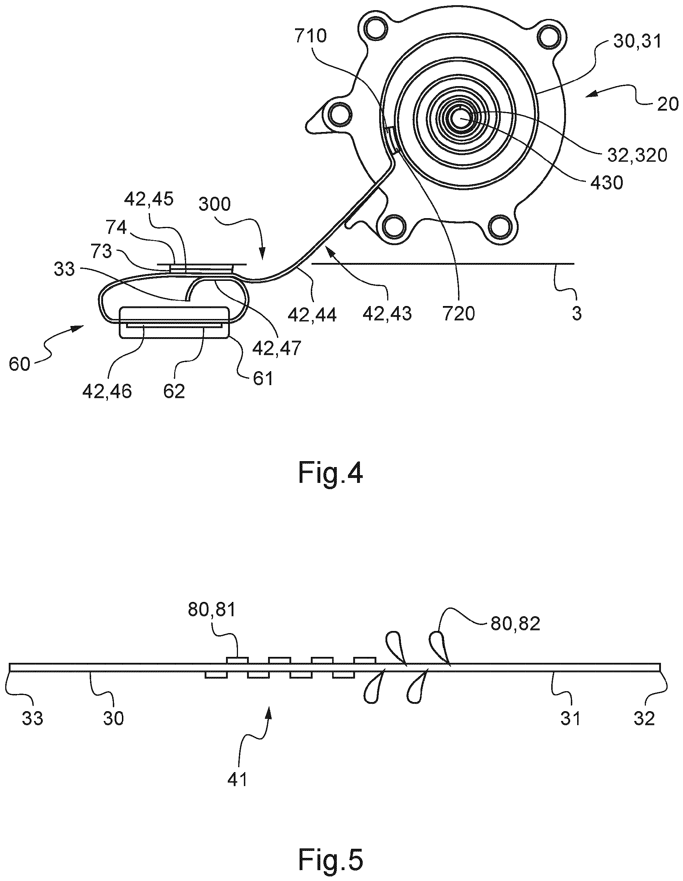

En référence à la figure 4, l'assemblage peut alors comporter un système anti-déroulement réversible pour maintenir le tronçon à déployer 41 dans le boîtier durant le mode de fonctionnement inactif MODINAC.

Par exemple, le système anti-déroulement est muni de deux attaches d'immobilisation 710, 720 auto-agrippantes solidaires chacune du tronçon à déployer 41. Les deux attaches d'immobilisation 710, 720 sont agrippées l'une à l'autre dans le mode de fonctionnement inactif MODINAC.

De manière complémentaire ou alternative, le tronçon de déploiement 42, voire la poignée 60, peuvent comprendre une fixation 73 auto-agrippante configurée pour être agrippée à la structure 2. Par exemple, la fixation 73 auto-agrippante est agencée sur le tronçon de départ 45 éventuel, en lui étant fixée par couture, collage ou autres.

En référence à la figure 4, une attache de repos 74 auto-agrippante, complémentaire de la fixation 73, peut être fixée à la cloison 3, au regard de l'issue de secours 10.

Un double système d'attache peut ainsi fixer la ligne de vie respectivement au dessus de la cloison 3 et au niveau de la poignée 60 dans le logement 19.

Selon une autre caractéristique et en référence à la figure 5, le tronçon à déployer 41 peut porter une pluralité de prises 80 fixées à la ligne de vie par couture, collage ou autres. Ces prises 80 peuvent comprendre des morceaux 81 ou « patch » en langue anglaise et/ou des boucles 82 par exemple. Les prises 80 peuvent être agencées en alternance de part et d'autre d'une bande 31 de la ligne de vie 30.

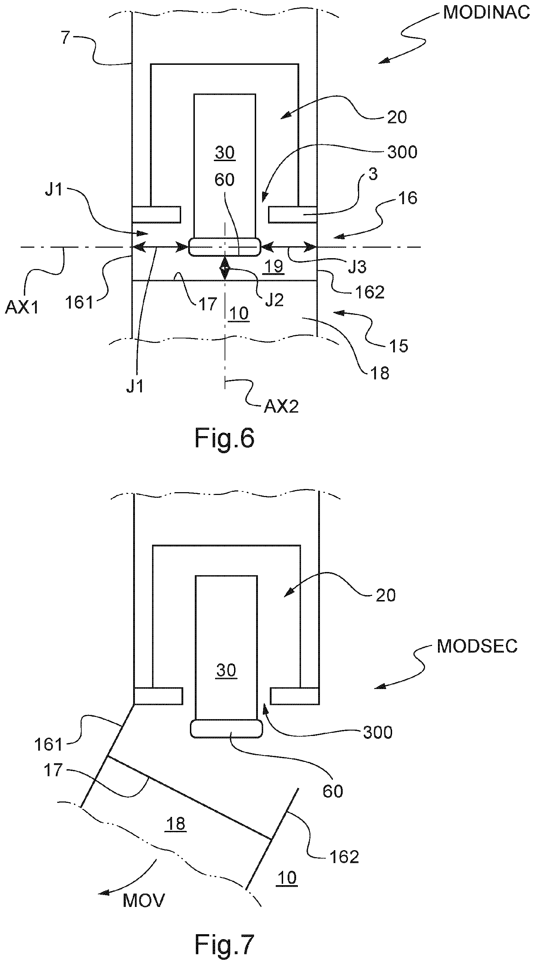

La figure 6 présente un assemblage 1 selon l'invention dans le mode de fonctionnement inactif MODINAC. Au moins un espace peut séparer la poignée 60 et le tronçon de déploiement des parois 161, 162, 17 du panneau 15 voire de la cloison délimitant le logement 19. Par exemple, deux espaces latéraux J1 et J3 séparent selon un premier AX1 la poignée 60 et respectivement le premier flanc 161 et le deuxième flanc 162, et un espace vertical J2 sépare la poignée 60 et le fond 17 selon un deuxième AX2 orthogonal au premier axe AX1.

Lors du mode de fonctionnement d'urgence MODSEC illustré sur la figure 7, un individu manoeuvre le panneau 15. Ce panneau 15 est enlevé selon un mouvement MOV de rotation et/ou de translation. Les divers espaces éventuels permettent d'éviter un contact entre le panneau 15 et la poignée 60. L'individu peut saisir la poignée 60 pour déployer la ligne de vie 30. La ligne de vie 30 peut en outre être retenue par sa zone d'extrémité proximale par la structure 2 voire le boitier 50.

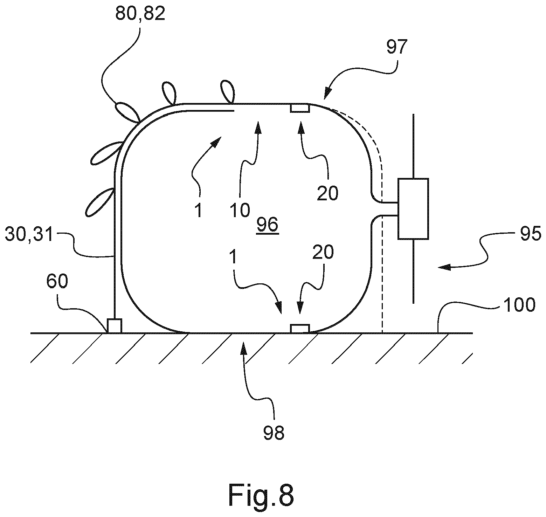

Selon la figure 8, un tel arrangement 1 peut être agencé sur un véhicule 95, par exemple un aéronef. Par exemple, deux arrangements 1 sont disposés de part et d'autre d'une cabine 96 pour garantir la disponibilité d'un arrangement 1 même lorsque le véhicule est couché d'un côté. En particulier, un arrangement 1 est situé d'un premier côté 97 du véhicule et un autre arrangement 1 est situé d'un deuxième côté 98 du véhicule 95.

Chaque ligne de vie 30 peut être dimensionnée pour atteindre le sol 100 selon aussi bien la position illustrée en trait continu que la position illustrée avec un trait en pointillés. Alternativement, une ligne de vie 30 peut être dimensionnée pour se rapprocher du sol sans pour autant le toucher et permettre à un humain d'atteindre le sol sans danger.

Par ailleurs, on note que le cas échéant, la ligne de vie 30 peut porter des prises 80 uniquement dans les zones utiles.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Arrangement (1) muni d'une cloison (3) délimitant au moins partiellement une issue de secours (10), ledit arrangement (1) ayant un panneau (15) mobile obturant ladite issue de secours (10) dans un mode de fonctionnement inactif (MODINAC), ledit arrangement (1) comportant un système d'évacuation (20) muni d'une ligne de vie (30),
**caractérisé en ce que** ladite ligne de vie (30) comprend un tronçon de déploiement (42) traversant un passage (300) de la cloison (3) et solidaire d'une poignée (60), ledit panneau (15) délimitant avec la cloison (3) un logement (19) dans lequel est agencée ladite poignée (60) dans le mode de fonctionnement inactif (MODINAC).

2. Arrangement selon la revendication 1,
**caractérisé en ce que** qu'au moins un espace (J1, J2, J3) sépare ledit tronçon de déploiement (42) et la poignée (60) dudit panneau (15), ledit espace (J1, J2, J3) empêchant ledit tronçon de déploiement (42) et la poignée (60) de toucher ledit panneau (15).

3. Arrangement selon l'une quelconque des revendications 1 à 2,
**caractérisé en ce que** ledit système d'évacuation (20) comporte un boîtier (50), ladite ligne de vie (30) comportant un tronçon à déployer (41) prolongé par le tronçon de déploiement (42), ledit tronçon à déployer (41) étant agencé dans le boîtier (50) dans le mode de fonctionnement inactif (MODINAC), ladite cloison (3) étant interposée entre ledit boîtier (50) et ladite issue de secours (10).

4. Arrangement selon la revendication 3,
**caractérisé en ce que** ledit tronçon à déployer (41) est enroulé sur lui-même dans ledit boîtier (50), ledit assemblage comprenant un système anti-déroulement réversible maintenant ledit tronçon à déployer (41) enroulé sur lui-même dans le mode de fonctionnement inactif (MODINAC).

5. Arrangement selon la revendication 4,
**caractérisé en ce que** ledit système anti-déroulement est muni de deux attaches d'immobilisation (710, 720) auto-agrippantes solidaires du tronçon à déployer et agrippées l'une à l'autre dans le mode de fonctionnement inactif (MODINAC).

6. Arrangement selon l'une quelconque des revendications 3 à 5,
**caractérisé en ce que** ledit tronçon de déploiement (42) comporte un tronçon initial (43) solidaire du tronçon à déployer (41), le tronçon initial (43) étant muni d'une attache de retenue (71) auto-agrippante configurée pour être agrippée à une attache de soutien (72) auto-agrippante complémentaire solidaire dudit boîtier (50).

7. Arrangement selon l'une quelconque des revendications 3 à 6,
**caractérisé en ce que** ledit tronçon à déployer (41) est solidaire d'une pluralité de prises (80).

8. Arrangement selon la revendication 7,
**caractérisé en ce que** lesdites prises (80) sont agencées en alternance de part et d'autre d'une bande (31) de ladite ligne de vie (30).

9. Arrangement selon l'une quelconque des revendications 1 à 8,
**caractérisé en ce que** ledit tronçon de déploiement (42) est prolongé par un tronçon final de la ligne de vie replié sur lui-même pour former ladite poignée (60), ledit tronçon final comprenant au niveau de la poignée (60) successivement un tronçon de départ (45) puis un tronçon intermédiaire (46) suivi d'un tronçon d'extrémité (47), le tronçon d'extrémité (47) étant fixé au tronçon de départ (45).

10. Arrangement selon la revendication 9,
**caractérisé en ce que** ledit arrangement (1) comporte une gaine (61) entourant ledit tronçon intermédiaire (46).

11. Arrangement selon l'une quelconque des revendications 1 à 10,
**caractérisé en ce que** ledit arrangement (1) comporte un lest (62).

12. Arrangement selon les revendications 9 et 11,
**caractérisé en ce que** ledit lest (62) est attaché au tronçon intermédiaire (46).

13. Arrangement selon l'une quelconque des revendications 1 à 12,
**caractérisé en ce que** ledit tronçon de déploiement (42) ou la poignée comporte une fixation (73) auto-agrippante configurée pour être agrippée à une attache de repos (74) auto-agrippante complémentaire solidaire de ladite cloison (3), ladite attache de repos (74) étant au regard de ladite issue de secours (10).

14. Arrangement selon les revendications 9 et 13,
**caractérisé en ce que** ladite fixation (73) auto-agrippante est agencée sur ledit tronçon de départ (45).

15. Véhicule (95),
**caractérisé en ce que** ledit véhicule (95) comporte au moins un arrangement (1) selon l'une quelconque des revendications 1 à 14.

16. Véhicule selon la revendication 15,
**caractérisé en ce que** ledit véhicule (95) comporte deux arrangements (1) selon l'une quelconque des revendications 1 à 14 disposés de part et d'autre d'une cabine (96).

## Patentansprüche

1. Anordnung (1) mit einer Trennwand (3), die einen Notausgang (10) zumindest teilweise begrenzt, wobei die Anordnung (1) eine bewegliche Platte (15) aufweist, die in einem inaktiven Betriebsmodus (MODINAC) den Notausgang (10) verschließt, wobei die Anordnung (1) ein Evakuierungssystem (20) umfasst, das mit einer Rettungsleine (30) ausgestattet ist,
**dadurch gekennzeichnet, dass** die Rettungsleine (30) einen Ausfahrabschnitt (42) umfasst, der einen Durchgang (300) der Trennwand (3) durchläuft und fest mit einem Griff (60) verbunden ist, wobei die Platte (15) mit der Trennwand (3) eine Aufnahme (19) begrenzt, in der in dem inaktiven Betriebsmodus (MODINAC) der Griff (60) angeordnet ist.

2. Anordnung nach Anspruch 1,
**dadurch gekennzeichnet, dass** mindestens ein Zwischenraum (J1, J2, J3) den Ausfahrabschnitt (42) und den Griff (60) von der Platte (15) trennt, wobei der Zwischenraum (J1, J2, J3) verhindert, dass der Entfaltungsabschnitt (42) und der Griff (60) die Platte (15) berühren.

3. Anordnung nach einem der Ansprüche 1 bis 2,
**dadurch gekennzeichnet, dass** das Evakuierungssystem (20) ein Gehäuse (50) umfasst, dass die Rettungsleine (30) einen auszufahrenden Abschnitt (41) umfasst, der durch den Ausfahrabschnitt (42) verlängert ist, dass der auszufahrende Abschnitt (41) in der inaktiven Betriebsart (MODINAC) in dem Gehäuse (50) angeordnet ist, und dass die Trennwand (3) zwischen dem Gehäuse (50) und dem Notausgang (10) eingefügt ist.

4. Anordnung nach Anspruch 3,
**dadurch gekennzeichnet, dass** der auszufahrende Abschnitt (41) in dem Gehäuse (50) auf sich selbst aufgerollt ist, und dass die Anordnung ein reversibles Antiabrollsystem umfasst, das in der inaktiven Betriebsart (MODINAC) den auszufahrenden Abschnitt (41) auf sich selbst aufgerollt hält.

5. Anordnung nach Anspruch 4,
**dadurch gekennzeichnet, dass** das Antiabrollsystem mit zwei selbsthaftenden Halteklammern (710, 720) versehen ist, die mit dem auszufahrenden Abschnitt fest verbunden sind und in der inaktiven Betriebsart (MODINAC) aneinander greifen.

6. Anordnung nach einem der Ansprüche 3 bis 5,
**dadurch gekennzeichnet, dass** der Ausfahrabschnitt (42) einen Anfangsabschnitt (43) umfasst, der fest mit dem auszufahrenden Abschnitt (41) verbunden ist, wobei der Anfangsabschnitt (43) mit einer selbsthaftenden Halteklammer (71) versehen ist, die konfiguriert ist, um an eine komplementäre selbsthaftende Halteklammer (72) angeheftet zu werden, die fest mit dem Gehäuse (50) verbunden ist.

7. Anordnung nach einem der Ansprüche 3 bis 6,
**dadurch gekennzeichnet, dass** der auszufahrende Abschnitt (41) fest mit einer Mehrzahl von Anschlüssen (80) verbunden ist.

8. Anordnung nach Anspruch 7,
**dadurch gekennzeichnet, dass** die Anschlüsse (80) abwechselnd auf beiden Seiten eines Streifens (31) der Rettungsleine (30) angeordnet sind.

9. Anordnung nach einem der Ansprüche 1 bis 8,
**dadurch gekennzeichnet, dass** der Ausfahrabschnitt (42) durch einen Endabschnitt der Rettungsleine verlängert ist, der auf sich selbst zurückgefaltet ist, um den Griff (60) zu bilden, wobei der Endabschnitt am Griff (60) nacheinander einen Anfangsabschnitt (45), dann einen Zwischenabschnitt (46) und schließlich einen Endabschnitt (47) umfasst, wobei der Endabschnitt (47) am Anfangsabschnitt (45) befestigt ist.

10. Anordnung nach Anspruch 9,
**dadurch gekennzeichnet, dass** die Anordnung (1) einen Mantel (61) aufweist, der den Zwischenabschnitt (46) umgibt.

11. Anordnung nach einem der Ansprüche 1 bis 10,
**dadurch gekennzeichnet, dass** die Anordnung (1) einen Ballast (62) umfasst.

12. Anordnung nach den Ansprüchen 9 und 11,
**dadurch gekennzeichnet, dass** der Ballast (62) an dem Zwischenabschnitt (46) befestigt ist.

13. Anordnung nach einem der Ansprüche 1 bis 12,
**dadurch gekennzeichnet, dass** der Ausfahrabschnitt (42) oder der Griff eine selbsthaftende Befestigung (73) aufweist, die konfiguriert ist, um an einer komplementären selbsthaftenden Ruhebefestigung (74) angeheftet zu werden, die fest mit der Trennwand (3) verbunden ist, wobei die Ruhebefestigung (74) dem Notausgang (10) zugewandt ist.

14. Anordnung nach den Ansprüchen 9 und 13,
**dadurch gekennzeichnet, dass** die selbsthaftende Befestigung (73) an dem Anfangsabschnitt (45) angeordnet ist.

15. Verkehrsmittel (95),
**dadurch gekennzeichnet, dass** das Verkehrsmittel (95) mindestens eine Anordnung (1) nach einem der Ansprüche 1 bis 14 aufweist.

16. Verkehrsmittel nach Anspruch 15,
**dadurch gekennzeichnet, dass** das Verkehrsmittel (95) zwei Anordnungen (1) nach einem der Ansprüche 1 bis 14 aufweist, die auf beiden Seiten einer Kabine (96) angeordnet sind.

## Claims

1. Arrangement (1) provided with a partition (3) at least partially delimiting an emergency exit (10), said arrangement (1) having a movable panel (15) that closes off said emergency exit (10) in an inactive operating mode (MODINAC), said arrangement (1) comprising an evacuation system (20) provided with a lifeline (30),
**characterized in that** said lifeline (30) comprises a deployment section (42) passing through a passage (300) in the partition (3) and having an integral handle (60), said panel (15) delimiting with the partition (3) a recess (19) in which said handle (60) is arranged in the inactive operating mode (MODINAC).

2. Arrangement according to Claim 1,
**characterized in that** at least one space (J1, J2, J3) separates said deployment section (42) and the handle (60) of said panel (15), said space (J1, J2, J3) preventing said deployment section (42) and the handle (60) from touching said panel (15).

3. Arrangement according to any one of Claims 1 to 2,
**characterized in that** said evacuation system (20) comprises a housing (50), said lifeline (30) comprising a section to be deployed (41) extended by the deployment section (42), said section to be deployed (41) being arranged in the housing (50) in the inactive operating mode (MODINAC), said partition (3) being interposed between said housing (50) and said emergency exit (10).

4. Arrangement according to Claim 3,
**characterized in that** said section to be deployed (41) is wound around itself in said housing (50), said assembly comprising a reversible anti-unwinding system that keeps said section to be deployed (41) wound around itself in the inactive operating mode (MODINAC).

5. Arrangement according to Claim 4,
**characterized in that** said anti-unwinding system is provided with two self-gripping immobilizing fasteners (710, 720) integral with the section to be deployed and engaged with one other in the inactive operating mode (MODINAC).

6. Arrangement according to any one of Claims 3 to 5,
**characterized in that** said deployment section (42) comprises an initial section (43) integral with the section to be deployed (41), the initial section (43) being provided with a self-gripping retaining fastener (71) configured to be engaged with a complementary self-gripping support fastener (72) integral with said housing (50).

7. Arrangement according to any one of Claims 3 to 6,
**characterized in that** said section to be deployed (41) is integral with a plurality of grips (80).

8. Arrangement according to Claim 7,
**characterized in that** said grips (80) are arranged alternately on either side of a strip (31) of said lifeline (30).

9. Arrangement according to any one of Claims 1 to 8,
**characterized in that** said deployment section (42) is extended by a final section of the lifeline folded on itself to form said handle (60), said final section comprising, at the handle (60), successively, a start section (45) then an intermediate section (46) followed by an end section (47), the end section (47) being fixed to the start section (45).

10. Arrangement according to Claim 9,
**characterized in that** said arrangement (1) comprises a sheath (61) surrounding said intermediate section (46).

11. Arrangement according to any one of Claims 1 to 10,
**characterized in that** said arrangement (1) comprises a ballast (62).

12. Arrangement according to claims 9 and 11,
**characterized in that** said ballast (62) is attached to the intermediate section (46).

13. Arrangement according to any one of Claims 1 to 12,
**characterized in that** said deployment section (42) or the handle comprises a self-gripping attachment (73) configured to engage with a complementary self-gripping resting fastener (74) integral with said partition (3), said resting fastener (74) facing said emergency exit (10).

14. Arrangement according to Claims 9 and 13,
**characterized in that** said self-gripping attachment (73) is arranged on said start section (45).

15. Vehicle (95),
**characterized in that** said vehicle (95) comprises at least one arrangement (1) according to any one of Claims 1 to 14.

16. Vehicle according to Claim 15,
**characterized in that** said vehicle (95) comprises two arrangements (1) according to any one of Claims 1 to 14 disposed on either side of a cabin (96).
